# EUROPEAN PATENT APPLICATION

(11) **EP 4 386 590 A1**
(43) Date of publication of application: **19.06.2024**
(21) Application number: 22876614.3
(22) Date of filing: 16.06.2022
(51) Int. Cl.: G06F 21/31, G06F 21/45, G06Q 20/40, G06Q 20/36, G07C 9/22, G07C 9/27

(54) **ELECTRONIC DEVICE AND METHOD FOR ADAPTIVELY PROVIDING AUTHENTICATION SCHEME OF SERVICE ON BASIS OF SITUATION, AND NON-TRANSITORY COMPUTER-READABLE STORAGE MEDIUM**

(30) Priority: 28.09.2021 KR 20210128384; 01.11.2021 KR 20210148334
(71) Applicant: Samsung Electronics Co., Ltd., Suwon-si, Gyeonggi-do 16677 (KR)
(72) Inventor: KIM, Taehwan, Suwon-si Gyeonggi-do 16677 (KR); OH, Junsuk, Suwon-si Gyeonggi-do 16677 (KR)
(74) Representative: Appleyard Lees IP LLP
(86) International application number: PCT/KR2022/008535
(87) International publication number: WO 2023/054839

(57) **Abstract**

An electronic device according to an embodiment may comprise: a display; a plurality of communication circuits; at least one memory configured to store instructions; and at least one processor configured to, when the instructions are executed, receive a first user input requesting the use of a service, identify the situation of the electronic device by using at least one of the plurality of communication circuits, identify an authentication scheme corresponding to the situation from among a plurality of authentication schemes registered for the service, use the display to display a visual object for guiding authentication of a user of the service, authenticate the user through the identified authentication scheme on the basis of at least one second user input, and provide the service on the basis of linking to an external electronic device.

## Description

### [Technical Field]

The disclosure relates to an electronic device, a method, and a non-transitory computer readable storage medium to adaptively provide an authentication scheme of a service based at least in part on a context.

### [Background Art]

A portable electronic device such as a smartphone, a laptop computer, a tablet, and/or a smart watch may be used for a digital wallet service provided via a user authentication based at least in part on interworking with an external electronic device. For example, a user may provide a privacy information to the external electronic device related to a gate based at least in part on authenticating the user by using the electronic device to enter the gate. As another example, a user may transmit a command to the external electronic device in a vehicle based at least in part on authenticating the user by using the electronic device to open a door of own vehicle or start the vehicle.

### [Disclosure]

### [Technical Problem]

An electronic device may provide a digital wallet service based on interworking with an external electronic device. The digital wallet service provided by the electronic device may require authentication of a user of the electronic device for a use of privacy information. To authenticate the user, various authentication schemes may be used in the electronic device. For example, the authentication schemes such as an input of a registered password, an input of a registered pattern, or an input of registered fingerprint information may be used in the electronic device to authenticate the user.

The electronic device may be included in various context since the electronic device is held by a user. For example, the electronic device may be included in context that received strength of signal received from the external electronic device is greater than a reference strength, or less than the reference strength. Accordingly, a solution for adaptively providing an authentication scheme for the digital wallet service according to the context of the electronic device may be required.

A technical object to be achieved in the present disclosure is not limited to the above-described technical object, and other technical objects not described may be clearly understood by those skilled in the art from the following description.

### [Technical Solution]

According to an embodiment, an electronic device may comprise a display, a plurality of communication circuits, at least one memory configured to store instructions, and at least one processor, wherein the at least one processor, when the instructions are executed, may be configured to receive a first user input requesting use of a service provided via a user authentication based on interworking with an external electronic device, based on receiving of the first user input, identify a context of the electronic device by using at least one of the plurality of communication circuits; identify an authentication scheme corresponding to the context among a plurality of authentication schemes registered with respect to the service for user authentication; display, by using the display, a visual object for guiding to authenticate a user of the service via the identified authentication scheme; based on at least one second user input received while the visual object is displayed, authenticate the user thorough the identified authentication scheme; and provide the service based on interworking with the external electronic device, in response to the authentication of user.

According to an embodiment, an electronic device may comprise at least one memory configured to store instructions and at least one processor, wherein the at least one processor, when instructions are executed, may be configured to receive a user input requesting a registration of a service provided via a user authentication based on interworking with an external electric device, based on a type of the service, identify authentication schemes to be used for the user authentication required when using the service, and when receiving a user input requesting the use of the service, register the service based on storing data for providing the authentication scheme corresponding to a context of the electronic device from among a plurality of authentication schemes for user authentication as associated with data on the service.

According to an embodiment, an electronic device may comprise a display, a communication circuit, at least one memory configured to store instructions, and at least one processor, and wherein the at least one processor, when the instructions are executed, may be configured to receive a user input requesting use of a service provided via a user authentication, based on interworking with an external electronic device, identify whether to be connectable with the external electronic device by using the communication circuit or not, based on receiving the user input, display a first visual object for guiding to authenticate a user of the service by using a first authentication scheme from among a plurality of authentication schemes registered with respect to the service for the user authentication via the display, based on identifying connectable with the external electronic device by using the communication circuit and based on identifying that connection with the external electronic device is impossible by using the communication circuit, display, via the display, a second visual object for guiding to authenticate the user by using a second authentication scheme from among the plurality of authentication schemes.

### [Advantageous Effects]

According to various embodiments, the electronic device may provide an enhanced user experience by adaptively providing an authentication scheme for a service based on a context identified using at least one of a plurality of communication circuits in the electronic device.

The effects that can be obtained from the present disclosure are not limited to those described above, and any other effects not mentioned herein will be clearly understood by those having ordinary knowledge in the art to which the present disclosure belongs, from the following description.

### [Description Of Drawings]

FIG. 1 is a block diagram of an electronic device in a network environment according to an embodiment;
FIG. 2 is a flowchart illustrating a method of registering a service according to an embodiment;
FIG. 3 illustrates examples of a user interface displayed when registering a service according to an embodiment;
FIG. 4 illustrates an example of a user interface displayed when registering a service according to an embodiment;
FIG. 5 illustrates another example of a user interface displayed when registering a service according to an embodiment;
FIG. 6 is a flowchart illustrating a method of identifying authentication schemes based on a type of service according to an embodiment;
FIG. 7 is a flowchart illustrating a method of displaying a visual object to indicate input of reference information based on identifying that the reference information includes an unregistered authentication scheme, according to an embodiment;
FIG. 8 illustrates an example of a user interface including a visual object to indicate input of reference information when registering a service according to an embodiment;
FIG. 9 is a flowchart illustrating a method of identifying a priority of each authentication scheme based on type of service, according to an embodiment;
FIG. 10 is a flowchart illustrating a method of using a service according to an embodiment;
FIG. 11 illustrates examples of a user interface displayed when performing user authentication for using a service according to an embodiment;
FIGS. 12 to 16 illustrate examples of environments identified for an authentication scheme for using a service according to an embodiment;
FIG. 17 illustrates an example of a visual object displayed when performing user authentication for using a service according to an embodiment;
FIG. 18 is a flowchart illustrating a method of user authentication via an identified authentication scheme from among a plurality of authentication schemes according to an embodiment;
FIG. 19 is a flowchart illustrating a method of identifying another authentication scheme from among a plurality of authentication schemes according to an embodiment;
FIG. 20 illustrates an another example of a visual object displayed when performing user authentication for using a service, according to an embodiment; and
FIG. 21 is a flowchart illustrating a method of displaying different visual objects based on identifying different authentication schemes according to an embodiment.

### [Mode For Invention]

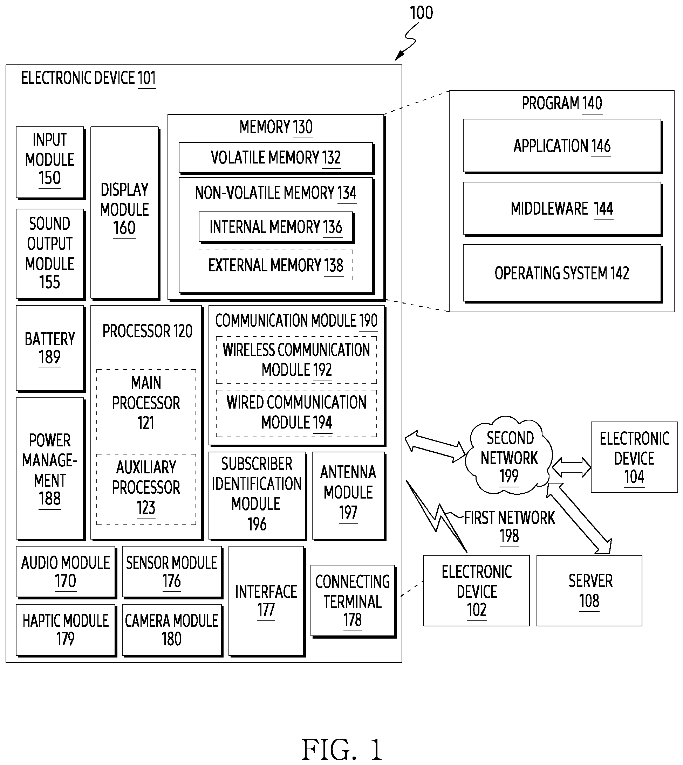

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120 and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

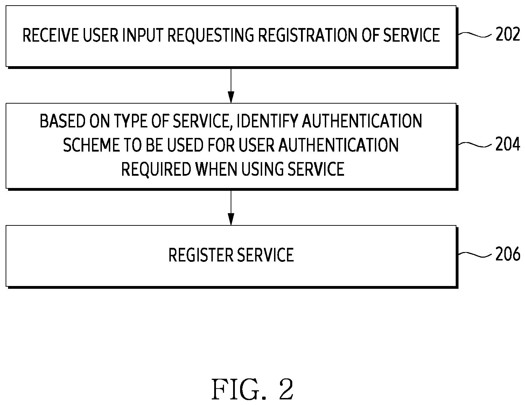

FIG. 2 is a flowchart illustrating a method of registering a service according to an embodiment. This method may be executed by electronic device 101 illustrated in FIG. 1, or a processor 120 of electronic device 101.

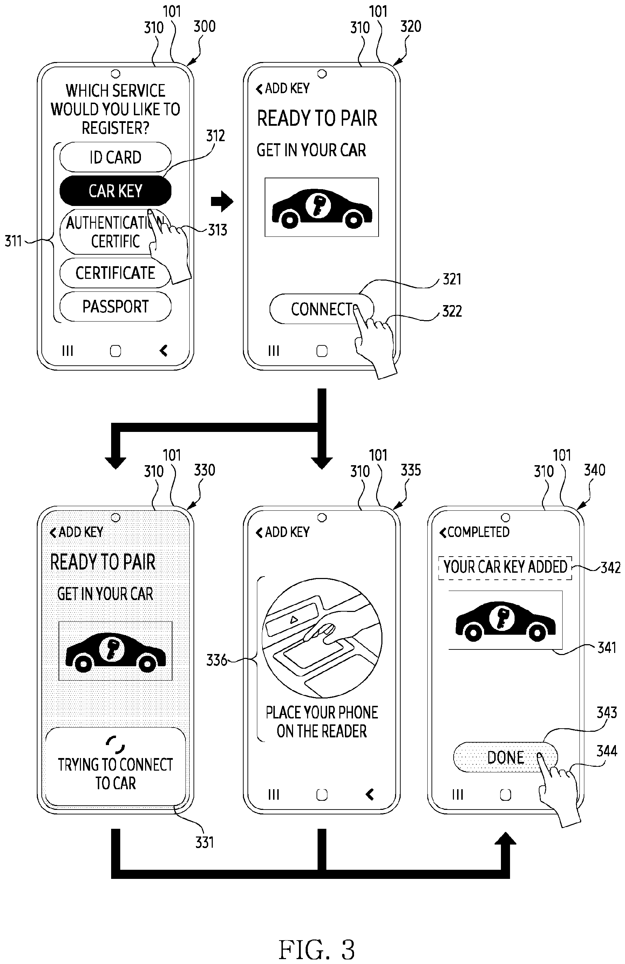

FIG. 3 illustrates examples of a user interface displayed when registering a service according to an embodiment.

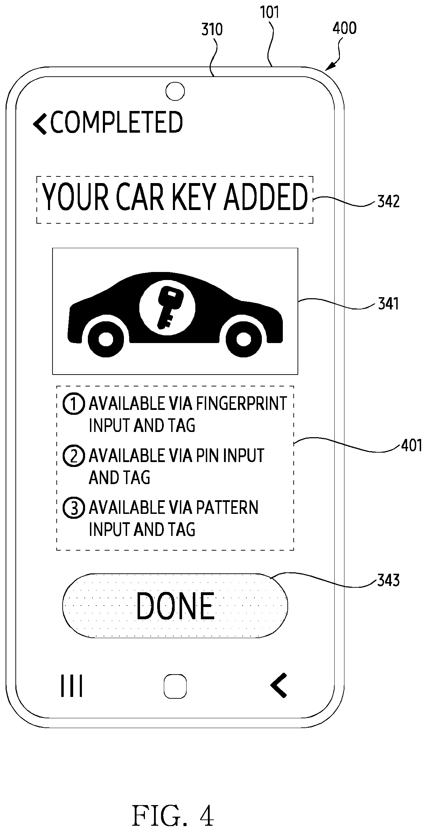

FIG. 4 illustrates an example of a user interface displayed when registering a service according to an embodiment.

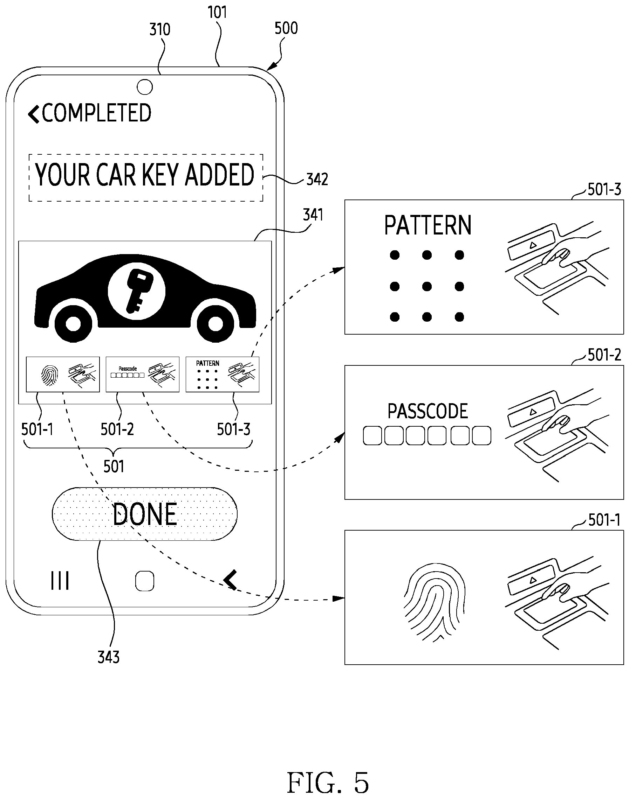

FIG. 5 illustrates another example of a user interface displayed when registering a service according to an embodiment.

Referring to FIG. 2, at operation 202, the processor 120 may receive user input requesting a registration of a service provided via a user authentication, based at least in part on interworking with an external electronic device (e.g., electronic device 102). For example, the service may be a digital wallet service provided based at least in part on interworking with the external electronic device. For example, the service may perform a payment using the electronic device 101 by providing credit card information of a user of the electronic device 101 to the external electronic device, the service may open the gate of secure area using the electronic device 101 by providing information identified about the user to the external electronic device, the service may open the door of a vehicle or start the vehicle using electronic device 101 by providing information about the vehicle to the external electronic device, or the service may perform a bank transfer using the electronic device 101 by providing information about the user's account to the external electronic device. For example, since the service requires the use of privacy information such as credit card information, identification information, vehicle information, or account information, the service may be provided via the user authentication. For example, the user authentication may be executed in electronic device 101 or based at least in part on interworking the electronic device 101 and the external electronic device.

For example, the processor 120 may receive the user input to register the service from among a plurality of services that may be provided via electronic device 101. For example, the user input may indicate a service selected from among a plurality of services that may be provided via application, installed in electronic device 101, for a digital wallet service. For example, referring to FIG. 3, in state 300, the processor 120 may display a plurality of visual objects 311, in user interface 310 of the application providing the digital wallet service, to indicate each of the plurality of the services. In state 300, the processor 120 may receive a user input 313 for visual object 312 that indicates a selection of the service providing a function of a car key using electronic device 101.

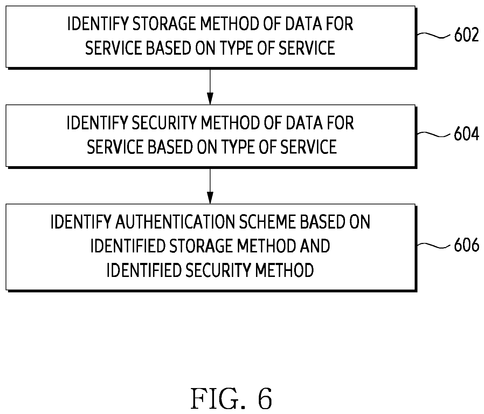

At operation 204, the processor 120 may identify an authentication scheme (security method) to be used for user authentication when using the service, based at least in part on a type of the service. For example, since the electronic device 101 may be portable, the electronic device 101 may be used in various contexts or environments. For example, the processor 120 may identify a plurality of authentication schemes, based at least in part on the type of the service, to adaptively provide a subset of the authentication schemes based at least in part on an environment in which the electronic device 101 may be located. For example, the authentication schemes may include two or more from among: a method of authenticating a user by inputting registered password via the user input, a method of authenticating a user by inputting registered passcode via the user input, a method of authenticating a user by inputting registered pattern via the user input, a method of authenticating a user by inputting registered fingerprint information via the user input, a method of authenticating a user by inputting registered face information via the user input, a method of authenticating a user by inputting registered iris pattern via the user input, a method of authenticating a user by inputting registered voice information via the user input, or a method of authenticating a user by contacting the electronic device 101 contact with the external electronic device via the user input. A method of identifying the authentication schemes based at least in part on the type of the service may be described later with reference to FIG. 6.

At operation 206, the processor 120 may register the service. For example, when the processor 120 receives user input requesting use of a service, the processor can store data associating an authentication scheme corresponding to the context of electronic device 101 with the service. For example, the processor 120 may identify a priority of one or more authentication schemes identified for each of one or more candidate environments in which the electronic device 101 may be located based at least in part on the authentication schemes identified at operation 204, and may obtain data for implementing the authentication schemes corresponding to the environment based at least in part on the identified priority.

For example, referring to FIG. 3, in state 300, the processor 120 may identify that the service indicated by the user input 313 is a service that provides a function of a vehicle key using the electronic device 101, in response to receiving the user input 313. Before registering the service based on the identification, the processor 120 may execute operations to authenticate the user as the owner of the vehicle. For example, the processor 120 may switch from state 300 to state 320 in response to receiving the user input 313.

As shown in FIG. 3, the user input 313 is a touch input, but the touch input may be replaced with another input format. For example, the user input 313 may be a vocal command (e.g., "car key registration") obtained via the input module 150 (e.g., microphone) of electronic device 101. According to an embodiment, the vocal command may be obtained after a call word (e.g., "Hi, Bixby") is obtained via input module 150, indicating that vocal recognition is required. However, it is not limited thereto.

At state 320, the processor 120 may display executable object 321 for executing establishing a connection with the vehicle (or the external electronic device installed in the vehicle and for driving and controlling the vehicle (e.g., a digital cockpit)) in the user interface 310. For example, the executable object 321 may be displayed in user interface 310 to authenticate that the user is the owner of the vehicle via a connection between the vehicle (or the electronic device in the vehicle) and electronic device 101. At state 320, the processor 120 may receive the user input 322 for the executable object 321.

For example, the processor 120 may switch the state 320 to the state 330 when the electronic device 101 includes communication circuit for an UWB communication scheme, in response to receiving the user input 322. At state 330, when establishing a connection with the external electronic device in the vehicle via the UWB communication scheme based on the user input 322, the processor 120 may display the visual object 331 in user interface 310. The processor may display the visual object 331 to indicate that a connection with the external electronic device is being established. According to an embodiment, to emphasize the display of the visual object 331, the remaining area of the user interface 310 (except for the area displaying the visual object 331) may be displayed with a blur or a translucent effect. According to an embodiment, the processor 120 may display the visual object 331 until the processor 120 transmits information to authenticate that the user is the owner of the vehicle and receives a message from the external electronic device to authenticate that the user is the owner of the vehicle. For example, since the message indicates an authentication that the user is owner of the vehicle, the processor 120 may identify the authentication scheme based on the type of the service in response to receive the message. The processor 120 may switch state 330 to state 340 in response to receiving the message. At state 340, the processor 120 may display the visual object 341 in the user interface 310. The processor 120 may display the visual object 340 to indicate that a service for opening the door of the vehicle or starting the vehicle may be performed using the electronic device 101. At state 340, the processor 120 may display information 342 indicating a completion of the service registration in the user interface 310. At state 340, the processor 120 may register the service in response to receiving the user input 344 for an executable object 343 indicating completion of the service registration in user interface 310.

As another example, the processor 120 may switch state 320 to state 335 in response to receiving the user input 322 when the electronic device 101 does not include a communication circuit for the UWB communication scheme. At state 335, the processor 120 may display the visual object 336 to indicate that the electronic device 101 is required to contact the external electronic device or an area within the vehicle connected to the external electronic device, to establish a connection with the external electronic device in the vehicle through a short-range communication (e.g., NFC) method based at least in part on the user input 322 within the user interface 310. The processor 120 may establish a connection with the external electronic device based at least in part on a contact between the electronic device 101 and a part of the vehicle when displaying the visual object 336 in the user interface 310. The processor 120 may transmit information to authenticate that the user is the owner of the vehicle, from the electronic device 101 to the external electronic device, through the established connection, and may display the visual object 336 until a message from the external electronic device is received to indicate that the user is the owner of the vehicle. For example, since the message indicates an authentication that the user is the owner of the vehicle, in response to receiving the message, the processor 120 may identify the authentication schemes that may be the provided when the service is used, based at least in part on the type of service. The processor 120 may switch state 335 to state 340 in response to receiving the message. At state 340, using the electronic device 101, the processor 120 may display the visual object 341 to indicate that a service for opening the door of the vehicle or starting the vehicle may be performed. At state 340, the processor 120 may display the information 342 to indicate that registration of the service is completed in user interface 310. At state 340, the processor 120 may register the service in response to receiving the user input 344 for an executable object 343 indicating completion of registration of the service in user interface 310.

According to an embodiment, the processor 120 may display information indicating the authentication schemes identified at operation 204. For example, referring to FIG. 4, the processor 120 may switch to state 400 instead of state 340 based at least in part on the identified authentication scheme. At state 400, the processor 120 may display the information indicating the authentication schemes in user interface 310. For example, the information 401 may include a text to indicate that the service may be used through an authentication scheme of inputting a fingerprint corresponding to a registered fingerprint and tagging (or contacting) the electronic device 101, a text to indicate that the service may be used through an authentication scheme of inputting a registered passcode (or registered PIN) and tagging the electronic device 101, and text to indicate that the service may be used through an authentication scheme of inputting a registered pattern and tagging the electronic device 101. However, it is not limited thereto.

According to an embodiment, the information 401 to indicate the authentication schemes may be images overlapped on the visual object 341. For example, referring to FIG. 5, the processor 120 may switch to state 500 instead of state 340 based at least in part on identifying the authentication schemes. At state 500, the processor 120 may display the images 501 to indicate each of the authentication schemes, by overlapping on the visual object 341 displayed in the user interface 310. For example, an image 501-1 from among images 501 may indicate that the service may be used via the authentication schemes of inputting a fingerprint corresponding to a registered fingerprint and tagging electronic device 101, and an image 501-2 from among images 501 may indicate that the service may be used via the authentication scheme of inputting a registered passcode and tagging the electronic device 101, and an image 501-3 from among 501 may indicate that the service may be used via authentication scheme of inputting the registered pattern and tagging the electronic device 101. However, it is not limited thereto.

As described above, the electronic device 101 may identify the authentication schemes based at least in part on type of the service when registering the service to adaptively provide an authentication scheme according to a context of the electronic device 101 or an environment in which the electronic device 101 is located when receiving a user input requesting use of the service. According to an embodiment, when registering the service, the electronic device 101 may provide information to indicate what the identified authentication schemes are.

FIG. 6 is a flowchart illustrating a method of identifying authentication schemes based at least in part on a type of service according to an embodiment. This method may be executed by the electronic device 101 illustrated in FIG. 1 or the processor 120 of the electronic device 101.

Operations 602 to 606 of FIG. 6 may be related to operation 204 of FIG. 2.

Referring to FIG. 6, at operation 602, the processor 120 may identify a scheme of storing data for the service based at least in part on the type of the service. For example, since a required security level may vary according to a content of the service requested for registration or according to a property of a privacy information used for the service requested for registration, the processor 120 may identify the type of service based at least in part on the user input received at operation 202. For example, a type of the service may be expressed as shown in Table 1 below.

**[Table 1]**

| Type of service |
|---|
| ID card |
| Digital key (e.g., vehicle key) |
| Authentication certificate |
| Certificate |
| Passport |
| ... |

For example, referring to FIG. 3, the processor 120 may identify a type of the service to be registered according to user input 313 as a type corresponding to the digital key from among the plurality of types illustrated in Table 1, based at least in part on receiving the user input 313.

According to an embodiment, the processor 120 may identify the storing scheme corresponding to the type of the service. For example, the processor 120 may identify at least one storing scheme corresponding to the type of service from among the storing scheme included in Table 2 below as a storing scheme for storing data on the service.

**[Table 2]**

| Storing scheme |
|---|
| eSE (enhanced secure element) |
| TZ (trust zone) |
| WBC (white-box Cryptography) |
| Non-secure storage |

In Table 2, eSE may mean a storing scheme provided via a hardware-based security function. For example, eSE may be storing scheme protecting data from digital attack via processing unit with enhanced security and physically unclonable function (PUF) that generates non-replicable keys. In Table 2, TZ may refer to a hardware-based storing scheme provided based at least in part on dividing an execution environment used by the processor 120 and the memory related to the processor 120 into a non-secure environment (e.g., rich environment) and a secure environment (e.g., trusted environment). In Table 2, WBC may mean storing scheme provided by preventing of an encryption key via a software-based security function. In Table 2, non-secure storage may refer to a scheme of storing data without processing for security or storing data with minimal security.

For example, when the type of the service requested for registration corresponds to the digital key, the processor 120 may identify each of eSE and TZ from among the storing schemes in Table 2 as a scheme of storing data on the service. However, it is not limited thereto.

At operation 604, the processor 120 may identify a security scheme of data for the service based at least in part on the type of the service. According to an embodiment, the processor 120 may identify the security scheme of the data as a security scheme corresponding to the type of the service. For example, the security scheme may mean a security scheme applied to a channel for the data. For example, the processor 120 may identify at least one security scheme corresponding to the type of the service from among the security schemes in Table3 below as the security scheme applied to the channel for the data.

**[Table 3]**

| Security scheme |
|---|
| SCP |
| TCP/IP |
| RSA |

In Table 3, SCP may refer to secure channel protocol, TCP/IP may refer to transmission control protocol/internet protocol, and Rivest-Shamir-Adleman (RSA) may refer to a security scheme providing authentication based at least in part on an electronic signature.

For example, when the type of the service requested to be registered corresponds to the digital key, the processor 120 may identify the SCP as a security scheme of data for the service.

FIG. 6 illustrates an example of performing operation 604 after performing operation 602, but this is for convenience of explanation. According to an embodiment, the processor 120 may perform operation 603 when performing operation 602 or may perform operation 602 after performing operation 604.

At operation 606, the processor 120 may identify authentication schemes to be used for user authentication required when using the service requested for registration, based at least in part on the identified storing scheme and the identified security scheme. For example, the processor 120 may identify the authentication schemes based at least in part on the security level corresponding to the identified storing scheme and the security level corresponding to the identified security scheme. For example, the processor 120 may identify the authentication schemes corresponding to the identified storage scheme and the identified security scheme from among the authentication schemes included in Table 4 below as authentication schemes to be used for user authentication required when using the service requested for registration.

**[Table 4]**

| Authentication scheme | | |
|---|---|---|
| Offline-based authentication scheme | Online-based authentication scheme | Non authentication |
| Offline biometric authentication | FIDO(fast identity online) | |
| Passcode | FIDO-UVI(user verification index) | |
| Password | ... | |
| Pattern | | |
| ... | | |

In Table 4, FIDO refers to an authentication scheme that authenticates the user through a transmission of the results of authentication (e.g., authentication result using biometric information) instead of a transmission of authentication data (e.g., biometric information), and FIDO-UVI may refer to an authentication scheme that requires a fingerprint to correspond to all the registered fingerprints when biometric information for authentication is fingerprint information, different from FIDO that authenticates the user even when the user's fingerprint obtained for authentication corresponds to any one of the registered fingerprints.

As described above, when the electronic device 101 receives a user input requesting to use the service for which registration is requested, the electronic device 101 may identify a plurality of authentication schemes based at least in part on the service type requested to be registered to adaptively provide an authentication scheme according to a context of the electronic device 101 or an environment in which the electronic device 101 is located. Since the plurality of authentication schemes are identified based at least in part on a data storing scheme for the service and a data security scheme for the service, the electronic device 101 may provide the service having an enhanced user experience in state of security maintenance.

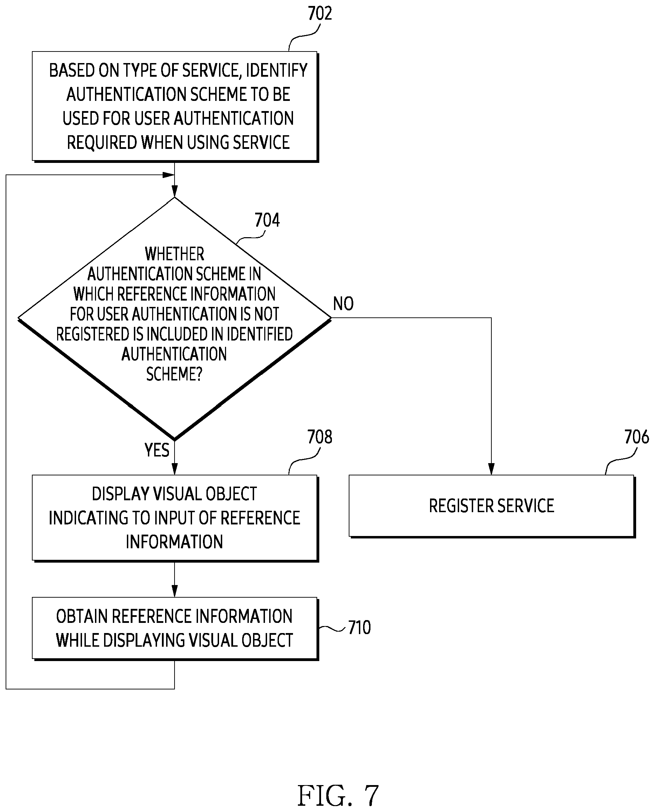

FIG. 7 is a flowchart illustrating a method of displaying a visual object to indicate input of reference information based at least in part on identifying that the reference information includes an unregistered authentication scheme, according to an embodiment. This method may be executed by the electronic device 101 illustrated in FIG. 1 or the processor 120 of electronic device 101.

Operations 702 to 710 of FIG. 7 may be related to operations 204 and 206 of FIG. 2.

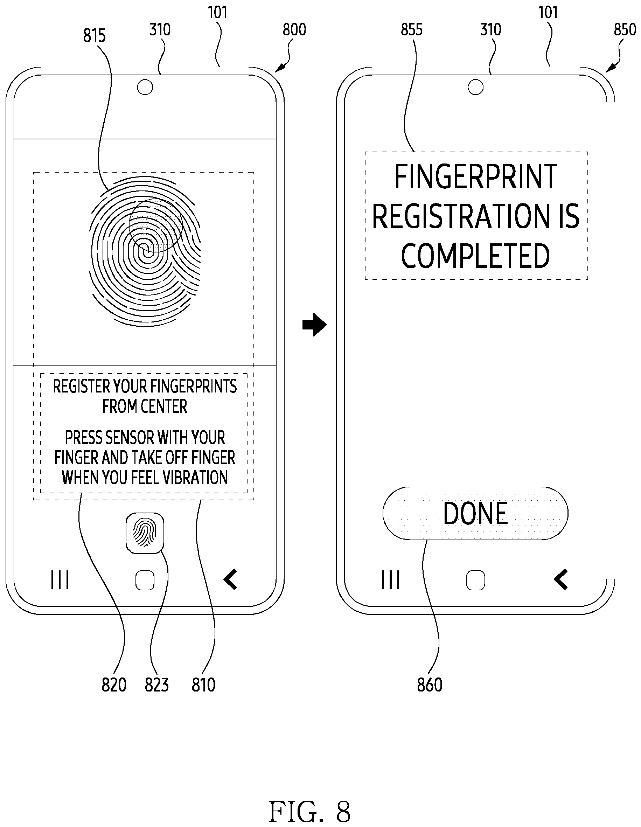

FIG. 8 illustrates an example of a user interface including a visual object to indicate input of reference information when registering service according to an embodiment.

Referring to FIG. 7, at operation 702, the processor 120 may identify the authentication schemes to be used for user authentication required when using the service, based at least in part on the type of the service requested to be registered. For example, operation 702 may correspond to operation 204 of FIG. 2 or operation 606 of FIG. 6.

At operation 704, the processor 120 may identify whether an authentication scheme in which reference information for user authentication is not registered is included in the authentication schemes based at least in part on identifying the authentication schemes. For example, the reference information may refer to information registered in the electronic device 101 or registered in the external electronic device to identify whether the information obtained via a user input received for user authentication when using the service is information to authenticate the user of the service. For example, the reference information may refer to information registered for comparison with the information obtained via the user input when performing user authentication. The processor 120 may perform operation 708 when the identified authentication schemes include an authentication scheme in which the reference information is not registered in the authentication schemes, and otherwise the processor 120 may perform operation 706.

At operation 706, the processor 120 may register the service based at least in part on identifying that an authentication scheme in which the reference information is not registered is not included in the authentication schemes. For example, the processor 120, when receiving the user input requesting the service, may register the service based at least in part on storing data for providing the user authentication scheme corresponding to an environment in which the electronic device is located from among the authentication schemes in connection with data on the service.

At operation 708, the processor 120 may display a visual object indicating to input of the reference information based at least in part on identifying that an authentication scheme in which the reference information is not registered is included in the authentication schemes. For example, referring FIG. 8, the processor 120 may switch to state 800 based at least in part on identifying that an authentication scheme in which the reference information is not registered is included in the authentication schemes. At state 800, the processor 120 may display at least one visual object 810 to indicate input of the reference information in user interface 310. For example, when the unregistered reference information is biometric information such as fingerprint information, at least one visual object 810 may be configured as at least one of an image 815 or a text 820 to indicate a scheme of registering biometric information (e.g., fingerprint information) of the service. However, it is not limited thereto. According to an embodiment, when a sensor obtaining the fingerprint information is provided under the display of the electronic device 101 or included in the display, the processor 120 may display visual object 823 to indicate a position capable of receiving the reference information at a position corresponding to the sensor's position.

At operation 710, when displaying the visual object, the processor 120 may obtain the unregistered reference information. For example, the processor 120 may obtain the reference information based at least in part on at least one user input received when displaying the visual object. For example, referring to FIG. 8, at state 800, the processor 120, when displaying at least one visual object, receives the at least one user input providing the biometric information via at least one sensor of the electronic device 101 and may obtain the reference information based at least in part on the at least one user input. The processor 120 may switch state 800 to state 850 based at least in part on obtaining the reference information. At state 850, the processor 120 may display the information 855 to indicate that obtaining the reference information is completed in user interface 310. At state 850, the processor 120 may display an executable object 860 to confirm that obtaining the reference information is completed in user interface 310. The processor 120 may complete obtaining the reference information based at least in part on receiving a user input for executable object 860.

The processor 120 may execute operation 704 again, based at least in part on obtaining the reference information at operation 710. For example, the processor 120 may identify whether another authentication scheme in which reference information for user authentication is not registered is included in the authentication schemes based at least in part on obtaining the reference information for the authentication scheme. For example, when another authentication scheme in which the reference information is not registered is included in the authentication schemes, the processor 120 may perform operation 708 and operation 710 again to obtain the reference information for the other authentication scheme, and otherwise the processor 120 may perform operation 706.

As described above, when unregistered authentication scheme reference information exists among the identified authentication schemes based at least in part on the type of the service requested, the electronic device 101 may enhance the user experience for user authentication by identifying the unregistered authentication scheme reference information when registering the service to perform authentication of the user when using the service, and the electronic device 101 may display a visual object for registering or obtaining the reference information.

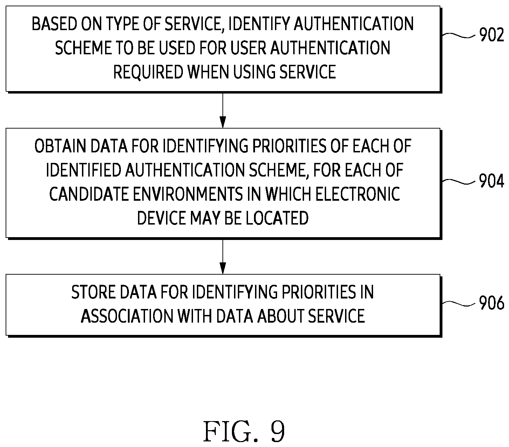

FIG. 9 is a flowchart illustrating a method of identifying a priority of each authentication scheme based at least in part on a type of service, according to an embodiment. This scheme may be performed by the electronic device 101 illustrated in FIG. 1, or the processor 120 of the electronic device 101.

Operation 902 to 906 of FIG. 9 may relate operations 204 and 206 of FIG. 2.

Referring to FIG. 9, at operation 902, the processor 120 may identify the authentication schemes to be used for user authentication when using the service based at least in part on the type of service requested to be registered. For example, operation 902 may correspond to operation 204 of FIG. 2, operation 606 of FIG. 6, or operation 702 of FIG. 7.

At operation 904, the processor 120 may obtain data for identifying a priority of each of the identified authentication schemes for each of one or more candidate environments in which electronic device 101 may be located when using the service requested for registration. For example, since the electronic device 101 is a portable device, the electronic device 101 may be located in various environments. For example, when the electronic device 101 may be located in an environment capable of communication connection with the external electronic device, or may be located in an environment in which communication connection with the external electronic device is impossible. For example, when the electronic device 101 is located in an environment in which communication connection with the external electronic device is possible, a user authentication through an online-based authentication scheme may be more suitable than an offline-based authentication scheme in terms of security, on the other hand, when the electronic device 101 is located in an environment in which communication connection with the external electronic device is impossible, a user authentication through an offline-based authentication scheme may be more suitable than user authentication through an online-based authentication scheme. As another example, when the electronic device 101 is in an environment in which the strength of a signal received from an intermediate node such as base station or an access point (AP) is greater than or equal to a reference strength, a user authentication via authentication scheme performed based at least in part on a cellular communication method or a Wi-Fi is more suitable than a user authentication through an authentication scheme performed based on a direct communication method in terms of usability or convenience. On the other hand, when the electronic device 101 is located in an environment in which the strength of the signal received from the intermediate node is less than the reference strength, a user authentication through an authentication scheme performed based on a direct communication method is more suitable than a user authentication via authentication scheme performed based on a cellular communication method or a Wi-Fi. As another example, when the electronic device 101 is located in a warm and humid environment, a user authentication via authentication scheme using fingerprint is more suitable in terms of security than user authentication via authentication scheme using password, passcode or pattern. On the other hand, when the electronic device 101 is located in a cold and dry environment, a user authentication via authentication scheme using password, passcode or pattern is more suitable in terms of usability or convenience than user authentication via authentication scheme using fingerprint information. As another example, when the electronic device 101 is in an environment having above a reference illumination, a user authentication via an authentication scheme based on face recognition is more suitable than other authentication schemes. On the other hand, when the electronic device 101 is located in an environment having below the reference illumination, a user authentication through another authentication scheme distinguished from an authentication scheme performed based on face recognition may be suitable. However, it is not limited thereto.

According to an embodiment, the processor 120 may obtain data to identify the priority of each of the identified authentication schemes for each of one or more candidate environments defined to represent these environments. For example, the data for identifying the priority may be composed of weights defined as shown in Table 5 below.

**[Table5]**

| | FIDO | Offline fingerprint | Passcode | Pattern | password |
|---|---|---|---|---|---|
| First communication link | 5 | 1 | 3 | 2 | 4 |
| Second communication link | 4 | 2 | 1 | 5 | 3 |
| Third communication link | 1 | 2 | 3 | 4 | 5 |
| Forth communication link | 5 | 4 | 3 | 2 | 1 |

For example, in Table 5, data corresponding to the first communication link shows weights respectively applied to authentication schemes in an environment in which the quality of a communication link established via a 5G (fifth generation) cellular communication scheme is above a reference quality, data corresponding to the second communication link shows weights respectively applied to authentication schemes in an environment in which the quality of a communication link established via a 4G (fourth generation) cellular communication scheme is above a reference quality, data corresponding to the third communication link shows weights respectively applied to authentication schemes in an environment in which the quality of a communication link established via a Wi-Fi direct communication scheme is above a reference quality, and data corresponding to the fourth communication link shows weights respectively applied to authentication schemes in an environment in which the quality of a communication link established via the Bluetooth communication scheme is above a reference quality. For example, when the electronic device 101 is located in a candidate environment where the quality of communication link established via the 5th generation cellular communication scheme is above the reference quality, the quality of the communication link established via the 4th generation cellular communication scheme is below the reference quality, the quality of the communication link established via Wi-Fi direct communication scheme is below the reference quality, and the quality of the communication link established via Bluetooth communication scheme is below the reference quality, the processor 120 may identify the priority in the order of a FIDO-based authentication scheme, a password-based authentication scheme, a passcode-based authentication scheme, a pattern-based authentication scheme, and an offline fingerprint-based authentication scheme, by applying weight 5 to the FIDO-based authentication scheme, weight 1 to the offline fingerprint-based authentication scheme, weight 3 to the passcode-based authentication scheme, weight 2 to the pattern-based authentication scheme, and weight 4 to the password-based authentication scheme. However, it is not limited thereto.

According to an embodiment, data for identifying the priority may be configured differently according to the type of the service. For example, data for identifying the priority may be configured to the weights defined as shown in Table 6 below, which are in part different than the weights illustrated in Table 5, according to the type of the service.

**[Table 6]**

| | FIDO | Offline fingerprint | Passcode | Pattern | Password |
|---|---|---|---|---|---|
| First communication link | 1 | 2 | 3 | 5 | 4 |
| Second communication link | 3 | 2 | 1 | 5 | 4 |
| Third communication link | 1 | 2 | 3 | 4 | 5 |
| Forth communication link | 5 | 4 | 3 | 2 | 1 |

For example, as shown in Table 6, data identifying the priority may comprise different weights for the identified authentication schemes according to the type of service.

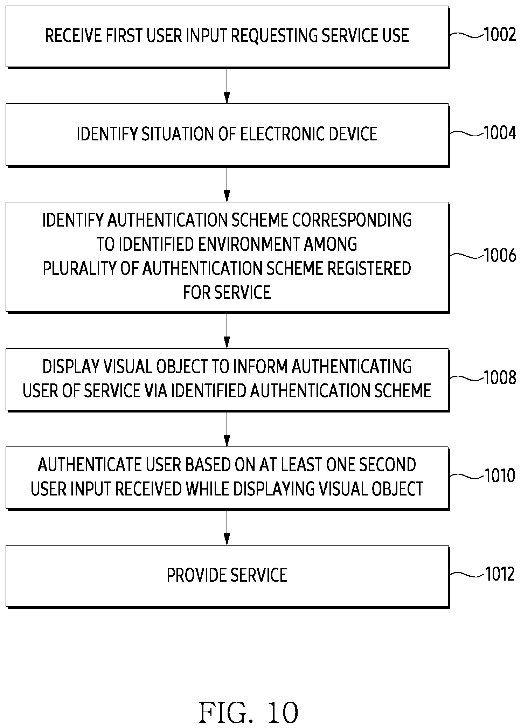

At operation 906, the processor 120 may store data for identifying the priority in association with data on the service. For example, the processor 120 may store data for identifying the priority, which may be expressed as shown in Table 5 to provide an authentication scheme corresponding to an environment in which electronic device 101 is located when the service is used. According to an embodiment, data for identifying the priority may be updated according to whether an authentication scheme identified based at least in part on the priority is used when the service is used. The example of updating the data will be described later with reference to FIG. 10.

As described above, the electronic device 101, to adaptively provide authentication scheme according to environment, may store the data for identifying the priority for each of the candidate environments in which the electronic device 101 may be located. The electronic device 101 may provide user authentication with enhanced usability or convenience according to the stored data.

FIG. 10 is a flowchart illustrating a method of using a service according to an embodiment. This method may be executed by the electronic device 101 illustrated in FIG. 1 or the processor 120 of the electronic device 101.

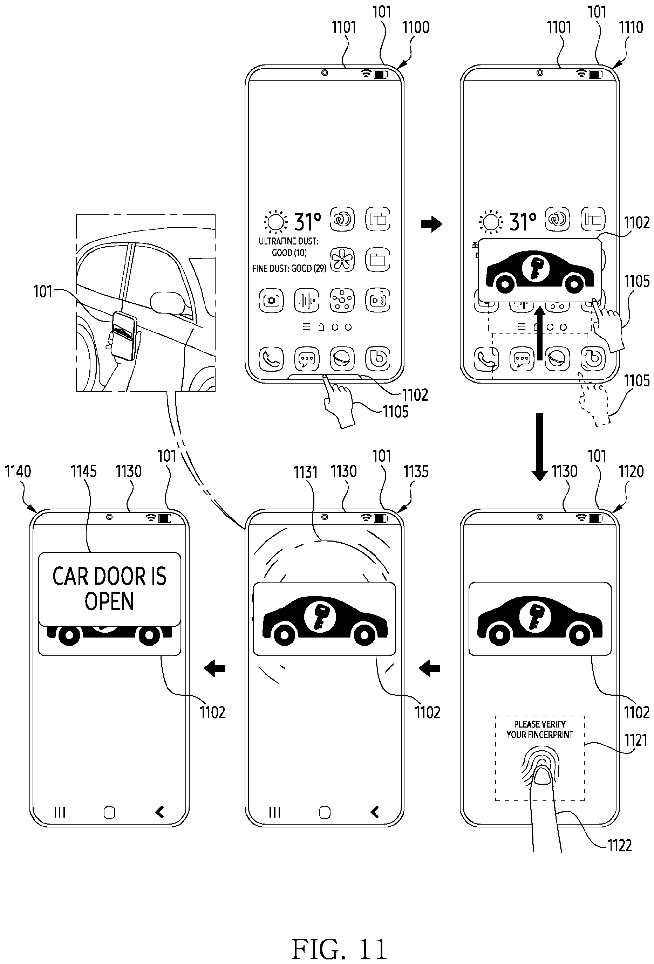

FIG. 11 illustrates examples of a user interface displayed when performing user authentication for using a service according to an embodiment.

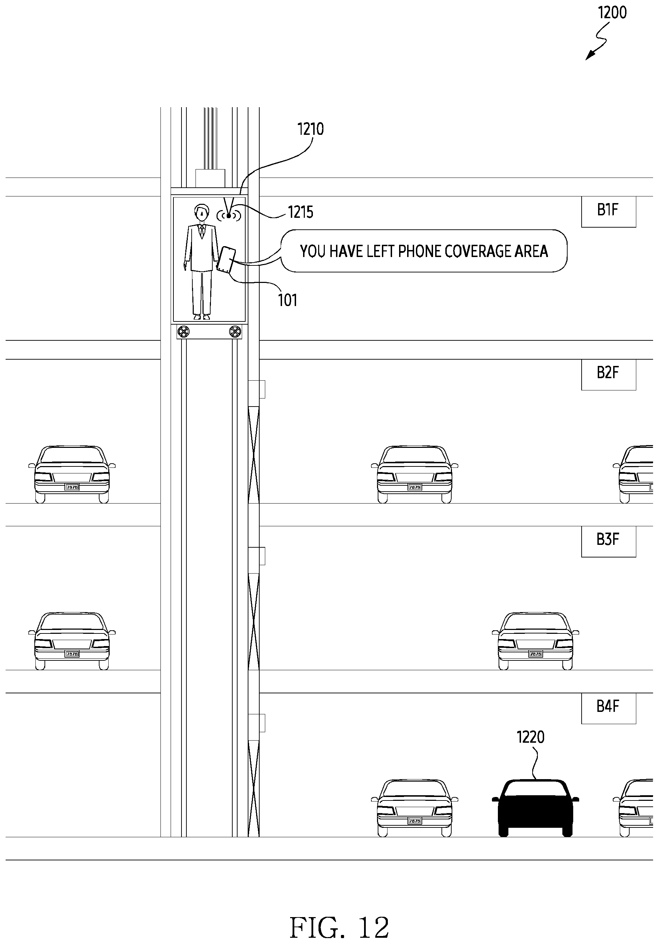

FIG. 12 to 16 illustrate examples of environments identified for an authentication scheme for using a service according to an embodiment.

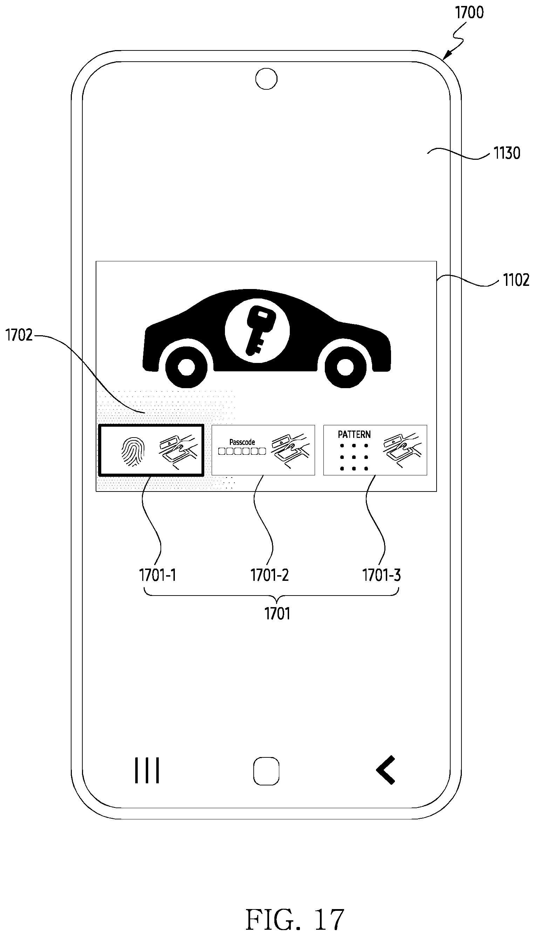

FIG. 17 illustrates an example of a visual object displayed when performing user authentication for using a service according to an embodiment.

Referring to FIG. 10, at operation 1002, the processor 120 may receive a first user input requesting use of a service provided via user authentication based at least in part on interworking with an external electronic device. For example, the service may be a service registered as shown in FIG. 2. For example, the service may be a registered service providing an electronic wallet service via an application. For example, the service may include performing payment using the electronic device 101 by providing information on a credit card of a user of the electronic device 101 to the external electronic device, opening the gate of secure area using the electronic device by providing the user's identification information to the external electronic device, opening the door of the vehicle or starting the vehicle using the electronic device 101 by providing vehicle information of the user to the external electronic device, and performing a bank transfer using the electronic device 101 by providing information on the user's account to the external electronic device. For example, since the service requires the use of privacy information such as credit card information, identification information, vehicle information, or account information, the service may be provided via the user authentication. However, it is not limited thereto.

For example, the first user input may indicate a selection of a service among a plurality of services registered via the application. According to an embodiment, the first user input may be received when displaying a lock screen via the display (e.g., display module 160 of FIG. 1) of the electronic device 101. According to an embodiment, the first user input may be received when displaying a screen distinguished from the lock screen via the display of the electronic device 101. For example, the first user input may be received when displaying a home screen including a plurality of executable objects to execute one or more applications installed in the electronic device 101, respectively. For example, referring to the FIG. 11, the processor 120, at state 1100, may display a home screen 1101. At state 1100, the home screen 1101 may include a visual object 1102 for using the service. For example, the visual object 1102 may have a representation intersected with the side of the display to indicate that the service is available without deteriorating visibility of the home screen 1101. For example, the visual object 1102 may have shape of a card inserted into a wallet to indicate that the service is available without deteriorating visibility of the home screen 1101. However, it is not limited thereto. The processor 120 may receive the user input 1105 that is the first user input at the state 1100. For example, the user input 1105 may be an input of dragging a visual object 1102. The processor 120 may switch state 1100 to state 1110 in response to receiving user input 1105. At state 1110, the processor 120 may display a visual object 1102 overlapping on the home screen 1101. For example, the visual object 1102 at state 1110 may have a shape indicating which function is provided via the service, unlike the visual object 1102 at state 1100. For example, the visual object 1102 at state 1110 may include an image indicating that the service is for opening a door of the vehicle or starting the vehicle based at least in part on interworking with an external electronic device related to the vehicle. However, it is not limited thereto.

At operation 1004, the processor 120 may identify a context of the electronic device 101 by using at least one of a plurality of communication circuits in the electronic device 101, based at least in part on receiving the first user input. For example, the processor 120 may identify an environment in which the electronic device 101 is located by using at least one of the plurality of communication circuits in the electronic device 101 based at least in part on receiving the first user input. For example, the plurality of communication circuits may include a communication module 190 illustrated in FIG. 1. For example, the plurality of the communication circuits may include two or more of at least one communication circuit for providing a cellular communication scheme, a communication circuit for providing Wi-Fi communication scheme, a communication circuit for providing Bluetooth communication scheme, a communication circuit for providing UWB communication scheme, a communication circuit for providing NFC communication scheme or a reception circuit for GNSS (global navigation satellite system).

According to an embodiment, when at least one of the plurality of communication circuits is deactivated when receiving the first user input, the processor 120, in response to receiving the first user input, may activate at least one of the plurality of communication circuits and identify the environment in which the electronic device 101 is located based at least in part on the activation. However, it is not limited thereto.

According to an embodiment, the processor 120 may identify the environment based at least in part on the received strength of each of signals received via at least one of the plurality of communication circuits. For example, the processor 120 may identify the location of the electronic device 101 based at least in part on the received strength and identify the environment based at least in part on the identified location. As another example, based at least in part on the received strength, the processor 120 may identify that the electronic device 101 is located in an environment in which only some of the plurality of communication schemes supported by the electronic device 101 are available in the environment, for communication with the external electronic device. However, it is not limited thereto.

According to an embodiment, the processor 120 may identify the environment based at least in part on information received via at least one of the plurality of circuits. For example, the processor 120 may identify the position of electronic device 101 based at least in part on signals received via the reception circuit for the GNSS and may identify the environment based at least in part on the identified position. As another example, the processor 120 may receive a weather information via at least one of the plurality of circuits and identify the environment based at least in part on the information. However, it is not limited thereto.

For example, referring to FIG. 12, the processor 120 may identify an environment 1200 in which the electronic device 101 is located via at least one of the plurality of the communication circuits. For example, the processor 120 may identify that the electronic device 101 is located in the elevator based at least in part on identifying that received strength of the signal received via a communication circuit for cellular communication scheme is below reference strength and signal strength received from access point (AP) 1215 in an elevator 1210 via the communication circuit for the Wi-Fi communication scheme is above the reference strength. For example, the processor 120 may identify that the electronic device 101 in the elevator 1210 is moving toward the electronic device user's vehicle 1220 located on the fourth basement floor based at least in part on the movement direction of the electronic device 101 identified via an acceleration sensor in the electronic device 101 and the first user input. As another example, the processor 120 may identify that electronic device 101 the in elevator 1210 is moving toward the vehicle 1220 of the user of the electronic device on fourth basement floor based at least in part on identifying that the received strength of a signal received via communication circuit for cellular communication scheme is reduced and receiving the first user input.

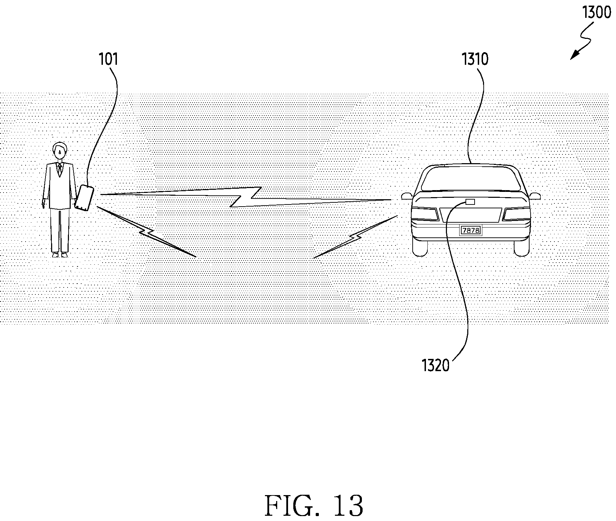

As another example, referring to FIG. 13, the processor 120 may identify an environment 1300 in which the electronic device 101 is located via at least one of the plurality of communication circuits. For example, the processor 120 may identify that the electronic device 101 is located in the environment 1300 spaced apart from the vehicle 1310 by more than a certain distance based at least in part on identifying that it is possible to establish a communication connection between the electronic device 101 and the external electronic device 1320 in the vehicle 1310 of the user of electronic device 101 by using a communication circuit for a communication scheme (e.g., a UWB communication scheme) having a first coverage, and identifying that it is impossible to establish a communication connection between the electronic device 101 and the external electronic device 1320 by using a communication circuit for the communication scheme (e.g., Bluetooth communication scheme or an NFC communication scheme) having a second coverage narrower than the first coverage. For example, the processor 120 may identify that the electronic device 101 is in the environment 1300 spaced apart from vehicle the 1310 parked underground by more than certain distance, based at least in part on identifying that the illuminance is below a reference illuminance using an illuminance sensor of the electronic device 101.

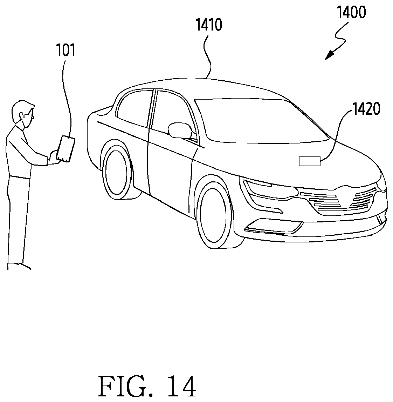

As another example, referring to FIG. 14, the processor 120 may identify an environment in which the electronic device 101 is located via at least one of the plurality of communication circuits. For example, the processor 120 may identify that the electronic device 101 is adjacent to the vehicle 1410 in an outdoor parking lot by identifying that the electronic device 101 is located outdoors through a receiving circuit for the GNSS and identifying a distance between the electronic device 101 and the external electronic device 1420 based at least in part on a signal received from the external electronic device 1420 in the vehicle 1410 through a communication circuit for Bluetooth. For example, the processor 120 may identify that electronic device 101 is located right next to the vehicle 1410 in an outdoor parking lot based at least in part on obtaining an image including a visual object corresponding to the vehicle 1410 via a camera of the electronic device 101.

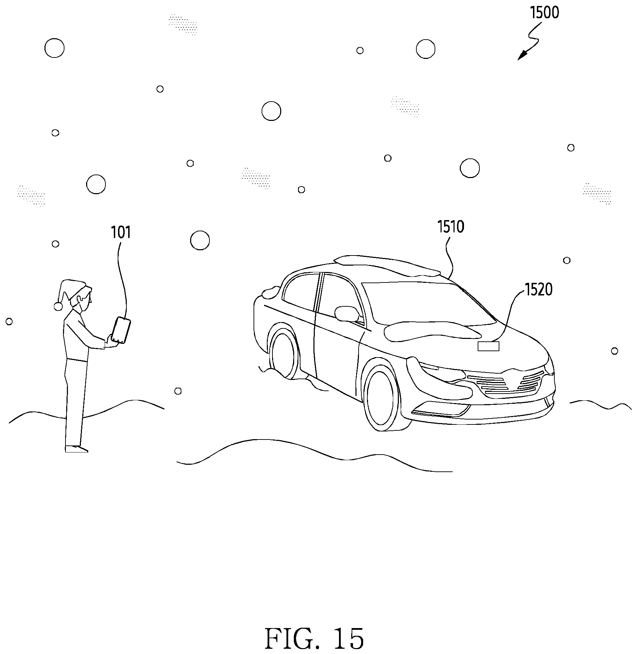

As another example, referring FIG. 15, the processor 120 may identify an environment 1500 in which the electronic device 101 is located via at least one of the plurality of communication circuits. For example, the processor 120 may identify that the electronic device 101 is located around the vehicle 1510 in cold weather based at least in part on information on weather received via a communication circuit for the cellular communication scheme and a communication connection established via a communication circuit for Bluetooth communication scheme between the electronic device 101 and the external electronic device 1520 in the vehicle 1510.

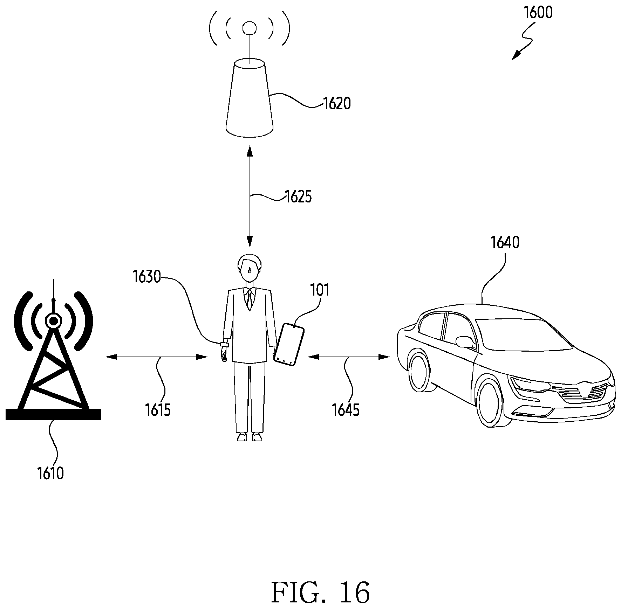

As another example, referring to FIG. 16, a processor 1200 may identify an environment 1600 in which the electronic device 101 is located via at least one of the plurality of the communication circuits. For example, the processor 120 may identify a location of the electronic device 101 by identifying a distance 1615 between a base station 1610 and the electronic device 101 based at least in part on a signal received from the base station 1610 through a communication circuit for a cellular communication scheme, identifying a distance 1625 between an AP 1620 and the electronic device 101 based at least in part on a signal received from the AP 1620 via the communication circuit for the Wi-Fi communication scheme, and identifying a distance 1645 between the electronic device 101 and a vehicle 1640 based at least in part on a reflected signal for the signal transmitted from the electronic device 101 to the vehicle 1640 via the communication circuit for the UWB communication scheme. The processor 120 may establish a communication connection between a wearable device 1630 and the electronic device 101 via a communication circuit for a Bluetooth communication method and identify that the electronic device 101 is in a state in which the wearable device 1630 is worn by a user , based at least in part on the user's biometric information of the electronic device 101 obtained through the sensor of the wearable device 1630 through the communication connection.

At operation 1006, the processor 120 may identify an authentication scheme corresponding to the environment from among the plurality of authentication schemes registered for the service for the user authentication.

For example, referring FIG. 12, The processor 120 may identify an authentication scheme that performs the user authentication using the Wi-Fi communication schemes from among the plurality of authentication schemes as an authentication scheme corresponding to the environment 1200, based at least in part on identifying that the electronic device 101 in the elevator 1210 is moving toward the vehicle 1220 located on fourth basement floor in a state in which communication via the cellular communication scheme is restricted. As another example, the processor 120 may identify an offline-based authentication scheme from among the plurality of authentication schemes as an authentication scheme corresponding to the environment 1200 based at least in part on identifying that the electronic device 101 in the elevator 1210 is moving toward the vehicle 1220 located on the fourth basement floor in a state in which communication through the cellular communication method is restricted.

As another example, referring to FIG. 13, the processor 120 may identify the authentication scheme for performing a user authentication as an authentication scheme corresponding to the environment 1300 by using a communication scheme having the first coverage from among the plurality of authentication schemes or a communication scheme having a coverage wider than the first coverage, based at least in part on identifying that it is possible to establish a communication connection with the external electronic device 1320 in the vehicle 1310 using the communication scheme with the first coverage and identifying that it is impossible to establish a communication connection with the external electronic device 1320 in the vehicle 1310 using the communication scheme with the second coverage narrower than the first coverage. As another example, referring to FIG. 14, the processor 120 may identify another authentication scheme distinguished from the authentication scheme for performing user authentication through face recognition from among the plurality of authentication schemes as an authentication scheme corresponding to the environment 1300 based at least in part on identifying that the illuminance around the electronic device 101 is less than the reference illuminance.

As another example, the processor 120 may identify a first authentication scheme for performing the user authentication through an offline-based authentication scheme from among the plurality of authentication schemes and a second authentication scheme for performing the user authentication through the NFC communication scheme as an authentication scheme corresponding to the environment 1400 based at least in part on identifying that the electronic device 101 is adjacent to the vehicle 1410.

As another example, referring to FIG. 15, since a fingerprint recognition has a relatively high probability of being misrecognized in cold weather, the processor 120 may identify the authentication scheme performing the user authentication via an input of a pattern (or password or passcode) from among the plurality of the authentication schemes as an authentication scheme corresponding to the environment 1500 based at least in part on identifying that the electronic device 101 is located around the vehicle 1510 and outdoor in cold weather.

As another example, referring to FIG. 16, the processor 120 may identify an authentication scheme to be used for user authentication from among the plurality of the authentication schemes, based at least in part on a distance 1615, a distance 1625 and a distance 1645, as an authentication scheme corresponding to environment 1600. According to an embodiment, the processor 120 may identify an authentication scheme performing the user authentication via the wearable device 1630 instead of the electronic device 101 as an authentication scheme corresponding to the environment 1600 based at least in part on identifying that the user of the electronic device 101 is wearing the wearable device 1630. An example of authenticating the user of the service via the wearable device 1630 after identifying the authentication scheme will be described later through the reference of operation 1010.

According to an embodiment, the processor 120 may identify an authentication scheme having the highest priority with respect to the identified environment from among the plurality of the authentication schemes as the authentication scheme corresponding to the environment. For example, the processor 120 may identify a priority of each of the plurality of authentication schemes based at least in part on data for identifying the priority each of the plurality of authentication schemes stored at the time of registration of the service. For example, when the data is configured as shown in Table 5, at operation 1004, based at least in part on identifying that the electronic device 101 is located in a candidate environment where the quality of communication link established via the 5th generation cellular communication scheme is above the reference quality, the quality of the communication link established via the 4th generation cellular communication scheme is below the reference quality, the quality of the communication link established via Wi-Fi direct communication scheme is below the reference quality, and the quality of the communication link established via Bluetooth communication scheme is below the reference quality, the processor 120 may identify the priority in the order of a FIDO-based authentication scheme, a password-based authentication scheme, a passcode-based authentication scheme, a pattern-based authentication scheme, and an offline fingerprint-based authentication scheme, by applying weight 5 to the FIDO-based authentication scheme which is one of the plurality of authentication schemes, weight 1 to the offline fingerprint-based authentication scheme which is one of the plurality of authentication schemes, weight 3 to the passcode-based authentication scheme which is one of the plurality of authentication schemes, weight 2 to the pattern-based authentication scheme which is one of the plurality of authentication schemes, and weight 4 to the password-based authentication scheme which is one of the plurality of authentication schemes, by using the data. The processor 120 may identify the FIDO-based authentication scheme having the highest priority from among the FIDO-based authentication scheme, the password-based authentication scheme, the passcode-based authentication scheme, the pattern-based authentication scheme, and the offline fingerprint-based authentication scheme as the authentication scheme corresponding to the environment.

According to an embodiment, the priority of each of the plurality of authentication schemes may be identified based at least in part on a past authentication heuristic including a history in which each of the plurality of authentication schemes has been used to authenticate the user when the electronic device 101 is located in the environment. For example, when the electronic device 101 fails to authenticate the user of the service via the identified authentication scheme from among the plurality of authentication schemes when located within the environment, the processor 120 may update (or refine) the past authentication heuristics based at least in part on data indicating that an authentication of a user of the service via the authentication scheme in the environment is failed. For example, in response to the update, data for identifying the priority configured as shown in Table 5 may be changed as shown in Table 7.

**[Table7]**

| | FIDO | Offline fingerprint | Passcode | Pattern | Password |
|---|---|---|---|---|---|
| First communication link | 4 | 1 | 3 | 2 | 5 |
| Second communication link | 4 | 2 | 1 | 5 | 3 |
| Third communication link | 1 | 2 | 3 | 4 | 5 |
| Forth communication link | 5 | 4 | 3 | 2 | 1 |

For example, in response to the update, the weight applied to the FIDO-based authentication scheme defined as 5 for the first communication link in Table 5 may be changed to 4 in Table 74, and the weight applied to the password-based authentication scheme defined as 4 for the first communication link in Table 5 may be changed to 5 in Table 7. However, it is not limited thereto.

At operation 1008, the processor 120 may display a visual object to inform (or to guide) the user to authenticate the service through the identified authentication method through the display of the electronic device 101. For example, referring to FIG. 11, the processor 120 may switch state 1110 to state 1120 in response to identifying a release of the user input 1105 dragging the visual object 1102 at state 1110. At state 1120, the processor 120 may display a user interface of the application that is executed in the electronic device 101 and provides the electronic wallet service. The user interface1130 displayed at state 1120 may include the visual object 1102 to indicate which service is the service selected for use. The user interface 1130 displayed at state 1120 may include the visual object 1121 to inform(or to guide) user of the service to be authenticated via an identified authentication scheme at operation 1006 from among the plurality of the authentication schemes.

According to an embodiment, an intermediate state between state 1110 and state 1120 may be defined to indicate which of the plurality of authentication schemes is identified. For example, referring to FIG. 17, the processor 120 may switch state 1110 to state 1700 in response to identifying the release of the user input 1105. At state 1700, the processor 120 may display the visual object 1701 to indicate each of the plurality of the authentication schemes in the visual object 1102 in the user interface 1130 or may display the visual object 1701 overlapping on the visual object 1102 within the user interface 1130. The visual object 1701-1 to indicate the identified authentication scheme from among the visual objects 1701 may be highlighted with respect to the visual object 1701-2 and the visual object 1701-3. For example, at state 1700, the processor 120 may display the visual effect 1702 surrounding the visual object 1701-1. The processor 120 may switch state 1700 to state 1120 after a designated time. However, it is not limited thereto.

At operation 1010, the processor 120 may authenticate the user of the service based at least in part on at least one of the second user input received when displaying the visual object. For example, referring to FIG. 11, at state 1120, when displaying visual object 1121, the processor 120 may obtain a fingerprint information from the user input 1122 contacting a finger on the visual object 1121 via a fingerprint sensor provided under an area displaying the visual object 1121, compare the obtained fingerprint information with the registered reference information, and authenticate the user of the service based at least in part on the result of the comparison.

According to an embodiment, the processor 120 may authenticate the user via another electronic device (e.g., wearable device) connected to the electronic device 101. For example, referring to FIG. 16, at operation 1006, the processor 120 may identify the authentication scheme performing the user authentication via the wearable device 1630 instead of electronic device 101 based at least in part on identifying that the user of the electronic device 101 is wearing the wearable device 1630. For example, when a quality of the link between the wearable device 1630 and the external electronic device in the vehicle 1640 is better than a quality of the link between the electronic device 101 and the external electronic device, the processor 120 may identify the authentication scheme performing the user authentication based at least in part on the biometric information obtained via the wearable device 1630 from among the plurality of the authentication schemes. The processor 120 may request the biometric information from the wearable device 1630 based at least in part on the identification. In response to the request, the processor 120 may authenticate the user based at least in part on the biometric information received from the wearable device 1630. However, it is not limited thereto.

At operation 1012, the processor 120 may provide the service based at least in part on interworking with the external electronic device in response to authenticating the user at operation 1010. For example, referring to FIG. 11, the processor 120 may authenticate the user based at least in part on the user input 1122 received at state 1120, and may switch state 1120 to state 1135 in response to authenticating the user.

For example, at state 1135, the processor 120 may display a visual effect 1131 to indicate that the door of the vehicle may be opened, or the vehicle may be started using a communication circuit for an NFC communication scheme with visual object 1102 in the user interface 1130. The processor 120 may transmit the signal for starting the vehicle or opening the door of the vehicle to the external electronic device in the vehicle using the communication circuit for the NFC communication scheme when displaying the visual effect 1131, via a connection between the electronic device 101 tagged (or contacted) to a part of the vehicle and the external electronic device. The external electronic device may transmit a message to indicate that the service is provided to the electronic device 101 after controlling the vehicle to open the door of the vehicle or to start the vehicle based at least in part on the signal. The processor 120 may switch state 1135 to state 1140, based at least in part on receiving the message. At state 1140, processor 120 may display a notification message 1145 to notify that the provision of the service is performed or completed within user interface 1110. According to an embodiment, the notification message 1145 may overlap on the visual object 1102. However, it is not limited thereto.

As another example, at state 1135, the processor 120 may display a visual effect 1131 to indicate that the door of the vehicle may be opened, or the vehicle may be started using a communication circuit for an UWB communication scheme with visual object 1102 in the user interface 1130. When displaying the visual effect 1131, the processor 120 may transmit a signal for opening the door of the vehicle or starting the vehicle to the external electronic device using a communication circuit for the UWB communication scheme. The external electronic device may control the vehicle to open the door of the vehicle or start the vehicle based at least in part on the signal, and then transmit a message to the electronic device 101 to indicate that the service is provided. The processor 120 may switch state 1135 to state 1140 based at least in part on receiving the message.

As described above, the electronic device 101 may identify an environment in which electronic device 101 is located based at least in part on a user input requesting the use of service registered in a state in which a plurality of authentication schemes is available, adaptively identify an authentication scheme of the plurality of authentication schemes according to the identified environment, and perform an operation to authenticate a user via the identified authentication scheme. The electronic device 101 may enhance a user experience of a service requiring authentication through these operations.

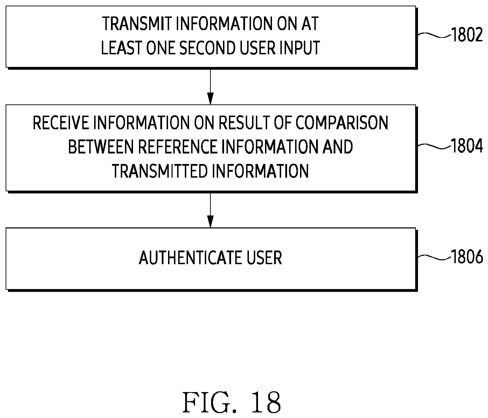

FIG. 18 is a flowchart illustrating a method of authenticating a user via an identified authentication scheme from among a plurality of authentication schemes according to an embodiment. This method may be executed by the electronic device 101 illustrating in FIG. 1 or the processor 120 of the electronic device 101.

Operations 1802 to 1806 of FIG. 18 may be related to operation 1010 of FIG. 10.

Referring to FIG. 18, at operation 1802, the processor 120 may transmit information on at least one second user input to the external electronic device based at least in part on receiving the at least one of the second user input defined via description of operation 1010. For example, the information on the at least one second user input may include obtaining data via a sensor of the electronic device 101 when receiving the at least one second user input.

At operation 1804, the processor 120 may receive information on a result of a comparison between the information and a reference information stored in the external electronic device or another external electronic device connected to the external electronic device from the external device. For example, the external electronic device may receive the information transmitted from the electronic device 101 at operation 1802, and compare the received information with the reference information stored in the external electronic device. For example, the reference information may be information obtained by the electronic device 101 and provided from the electronic device 101 when registering the service. However, it is not limited thereto. As another example, the external electronic device may receive the information transmitted from the electronic device 101 at operation 1802 request to transmit the reference information to the other external electronic device based at least in part on receiving the information. The external electronic device may receive the reference information from the other external device in response to the request and may compare the reference information and the information. The external electronic device may transmit the information on result of the comparison to the electronic device 101.

At operation 1806, the processor 120 may authenticate the user based at least in part on information on the result. For example, the information on the result may include data indicating that the information on the at least one second user input corresponds to the reference information. The processor 120 may obtain the data from the information and may authenticate the user based at least in part on the data.

As described above, the electronic device 101 may authenticate the user in the electronic device 101, and may also authenticate the user via communication between the electronic device 101 and the external electronic device.

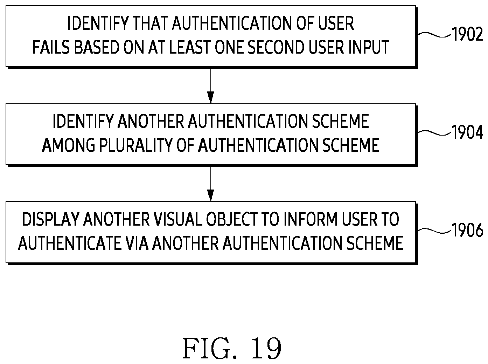

FIG. 19 is a flowchart illustrating a method of identifying another authentication scheme from among a plurality of authentication schemes according to an embodiment. This method may be executed by the electronic device 101 illustrated in FIG. 1 or the processor 120 of the electronic device 101.

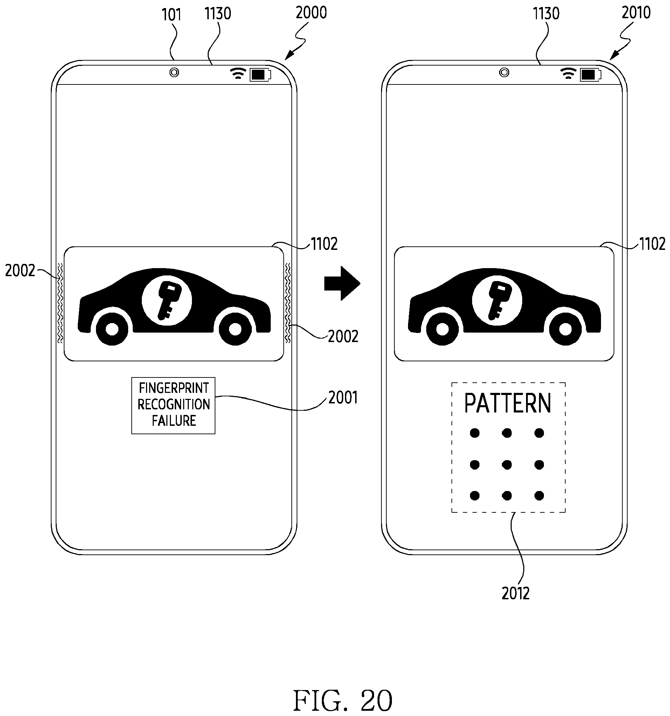

FIG. 20 illustrates another example of a visual object displayed when performing user authentication for using a service, according to an embodiment.

Referring to FIG. 19, at operation 1902, the processor 120 may identify that it fails to authenticate the user of the requested service based at least in part on the at least one second user input received at operation 1010. For example, when the password is incorrectly input by the at least one second user input, the processor 120 may identify that authentication of the user fails. According to an embodiment, the processor 120, based at least in part on the identification, may display information to indicate the failure to authenticate the user via the display of the electronic device 101. For example, referring to FIG. 20, as at state 2000, the processor 120 may display the information 2001 to indicate the failure to authenticate the user of the service in user interface 1130 based at least in part on the identification. According to an embodiment, at state 2000, the processor 120 may display a visual effect 2002 on visual object 1102 together with information 2001 in user interface 1130 to indicate the failure to authenticate the user of the service. For example, the visual effect 2002 may be bounce the visual object 1102. However, it is not limited thereto.

At operation 1904, the processor 120 may identify another authentication scheme from among the plurality of the authentication schemes in response to identifying the failure to authenticate the user of the service. For example, the processor 120 may identify a priority of each of the remaining authentication schemes except for the authentication scheme identified at operation 1006 from among the plurality of authentication schemes and may identify another authentication scheme based at least in part on the priority.

At operation 1906, the processor 120 may display another visual object to inform a user to authenticate via the another authentication scheme based at least in part on identifying the other authentication scheme. For example, referring to FIG. 20, the processor 120 may switch state 2000 to state 2010 in response to identifying the other authentication scheme at state 2000. At state 2010, the processor 120 may display another visual object 2012 to indicate an authentication scheme via pattern input, which is the other authentication scheme, together with visual object 1102.

Although not illustrated in FIG. 19, according to an embodiment, the processor 120 may adjust the priority of the authentication scheme identified at operation 1006 in response to identifying that authentication of the user fails via the authentication scheme identified at operation 1006 based at least in part on the at least one second user input. The processor 120 may update a past authentication heuristics used to identify a priority of each of the plurality of the authentication schemes based at least in part on the adjusted priority information.

As described above, when the electronic device 101 fails to authenticate the user through an authentication scheme corresponding to the environment in which the electronic device 101 is located, the electronic device 101 may enhance a convenience of user authentication for the use of the service by identifying another authentication scheme different from the authentication scheme.

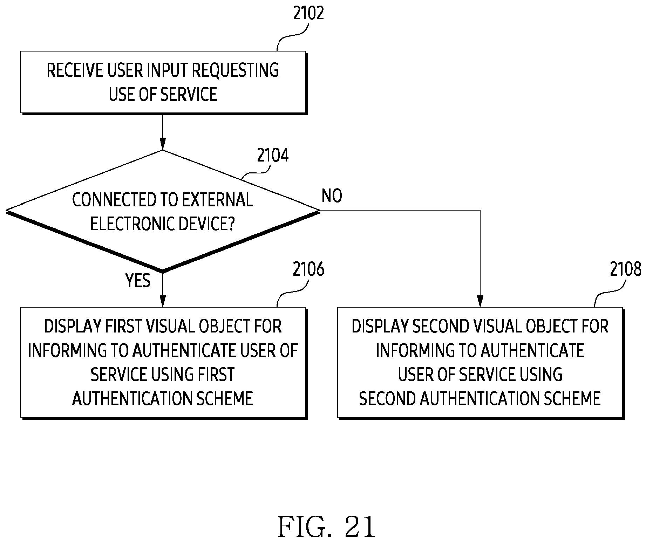

FIG. 21 is a flowchart illustrating a method of displaying different visual objects based on identifying different authentication schemes according to an embodiment. This method may be executed by electronic device 101 in FIG. 1 or the processor 120 of electronic device 101.

Referring to FIG. 21, at operation 2102, the processor 120 may receive the user input requesting use of service providing via user authentication based at least in part on interworking with external electronic device. For example, operation 2102 may correspond to operation 1002 of FIG. 10.

At operation 2104, the processor 120 may identify whether it may be connected to the external electronic device by using a communication circuit of the electronic device 101 based at least in part on the received user input. For example, the processor 120 may broadcast a signal for scanning the external electronic device via the communication circuit in response to receiving the user input. For example, since the external electronic device has a history of connection with the electronic device 101 when registering the service, the signal may cause the external electronic device to execute operations for establishing a connection with the electronic device 101. For example, in response to the external electronic device receiving the signal, the external device may transmit a response signal to the electronic device 101 to establish a connection between the electronic device 101 and the external electronic device. For example, the response signal may include at least one of the resource information on signals to be provided to the external electronic device via the connection from the electronic device 101 or resource information on signals to be provided to the electronic device 101 via the connection. However, it is not limited to this.

At operation 2106, the processor 120 may display a first visual object to inform a user to authenticate using a first authentication scheme from among a plurality of authentication schemes registered for user authentication via the display of electronic device 101. For example, the first authentication scheme may be an authentication scheme performed based at least in part on a connection between the electronic device 101 and the external electronic device. For example, the processor 120 may identify that it is possible to connect to the external electronic device based at least in part on receiving the response signal, and may display the first visual object based at least in part on the identification.

At operation 2108, the processor 120, based at least in part on identifying that connection with the external electronic device is impossible, may display a second visual object to inform the user to authenticate using a second authentication scheme among the plurality of authentication schemes through the display of electronic device 101. For example, the second authentication scheme may be an authentication scheme performed without the connection between the electronic device 101 and the external electronic device. For example, based at least in part on identifying that the response signal is not received for a designated time after transmitting the transmitting signal illustrated through the description of operation 2104, the processor 120 may identify that connection with the external electronic device is impossible and display the second visual object based at least in part on the identification.

Although not illustrated in FIG. 21, the processor 120 may identify whether at least one user input is received when displaying the first visual object or the second object and authenticate the user via the first authentication scheme or the second authentication scheme based at least in part on the at least one user input, on a condition that the at least one user input is received. The processor 120 may provide the service based at least in part on the interworking with the external electronic device in response to authenticating the user.

As described above, the electronic device 101 may adaptively display different visual objects according to the identified environment in which electronic device 101 is located by identifying whether it is possible to be connected to an external electronic device based at least in part on receiving a user input requesting use of the service. Adaptive display of the different visual object may mean that different authentication schemes are adaptively provided according to the environment. Accordingly, the electronic device 101 may enhance the quality of a service requiring user authentication.

As described above, an electronic device(e.g., electronic device 101) may comprise a display(e.g., display module 160), a plurality of communication circuits(e.g., communication module 190), at least one memory(e.g., memory 130) configured to store instructions, and at least one processor(e.g., processor 120), wherein the at least one processor, when the instructions are executed, may be configured to receive a first user input requesting use of a service provided via a user authentication based on interworking with an external electronic device, based on receiving of the first user input, identify a context of the electronic device by using at least one of the plurality of communication circuits; identify an authentication scheme corresponding to the context among a plurality of authentication schemes registered with respect to the service for user authentication; display, by using the display, a visual object for guiding to authenticate a user of the service via the identified authentication scheme; based on at least one second user input received while the visual object is displayed, authenticate the user thorough the identified authentication scheme; and provide the service based on interworking with the external electronic device, in response to the authentication of user.

In an embodiment, when the instructions are executed, the processor may be configured to identify based on signals received via at least one of the plurality of communication circuits, a position of the electronic device, and identify the context based on the identified position.

In an embodiment, when the instructions are executed, the at least one processor may be configured to identify distance between the electronic device and the external electronic device, based on a received strength of a signal received via at least one of the plurality of communication circuits from the external electronic device, and identify the context based on the identified distance. For example, when the instructions are executed, the processor may be further configured to identify, based on the distance, a communication scheme from among a plurality of communication schemes provided via the plurality of communication circuits, and in response to the user authentication, provide the service by interworking with the external electronic device via an established channel between the external electronic device and the electronic device based on the identified communication scheme.

In an embodiment, the electronic device may further comprise an illuminance sensor, wherein the at least one processor, when the instructions are executed, may be further configured to identify a brightness around the electronic device via the illuminance sensor, and identify the context further based on the brightness.

In an embodiment, when the instructions are executed, the at least one processor may be configured to identify an authentication scheme with the highest priority with respect to the context from among the plurality of authentication schemes as the authentication scheme corresponding to the context, and wherein the priority of the plurality of authentication scheme may be, while the electronic device has been the context, identified based on past authentication heuristics including a history in which each of the plurality of authentication schemes has been used for authenticating the user. For example, when the instructions are executed, the at least one processor may be configured to, in response to identifying failure to authenticate the user via the identified authentication scheme, adjust the priority of the identified authentication scheme based on the at least one second user input, and update the past authentication heuristics based on the adjusted priority information.

In an embodiment, when the instructions are executed, the at least one processor may be further configured to identify the context based on a received signal strength of each of a plurality of signals received via the plurality of communication circuits based on the receiving the first user input.

In an embodiment, when the instructions are executed, the at least one processor may be configured to transmit the information on the at least one second user input to the external electronic device, receive, from the external electronic device, information on a result of comparison between the information and reference information stored in the external electronic device or another external electronic device connected with the external electronic device, and authenticate the user based on the information on the result.

In an embodiment, when the instructions are executed, the at least one processor may be further configured to identify, in response to identifying the failure to authenticate the user via the identified authentication scheme, based on the at least one second user input, another authentication scheme from among the plurality of authentication schemes, and display, by using the display, another visual object for guiding to authenticate the user via another authentication scheme.

As described above, an electronic device (e.g., electronic device 101) may comprise at least one memory (e.g., memory 130) configured to store instructions and at least one processor (e.g., processor 120), wherein the at least one processor, when the instructions are executed, may be configured to receive a user input requesting a registration of a service provided via a user authentication based on interworking with an external electric device, based on a type of the service, identify authentication schemes to be used for the user authentication required when using the service, and when receiving a user input requesting the use of the service, register the service based on storing data for providing the authentication scheme corresponding to a context of the electronic device from among a plurality of authentication schemes for user authentication as associated with data on the service.

In an embodiment, when the instructions are executed, the at least one processor may be configured to identify a data storing scheme about the service based on the type of the service, identify a data security scheme about the service based on type of the service, and based on the storing and the security scheme, identify the authentication schemes.

In an embodiment, the electronic device may further comprise a display and wherein the at least one processor, when the instructions are executed, may be configured to display, based on identifying the authentication schemes, information for guiding that the service is available through the user authentication through each of the authentication schemes via the display. For example, the information may include a first visual object to represent each of the authentication schemes, and wherein the at least one processor, when the instructions are executed, may be further configured to display each of the first visual object overlapping on a second visual object for representing the service displayed in response to receiving the user input requesting use of the registered service. For example, the electronic device may further comprise a plurality of communication circuits(e.g., communication module), wherein the at least one processor, when the instructions are executed, may be configured to identify the context by using at least one of the pluralities of communication circuits in response to receiving the user input requesting use of the registered service, identify the authentication scheme corresponding to the identified context from among the authentication schemes, display a third visual object for guiding to authenticate user of the service through the identified authentication scheme via the display, based on at least one user input received while displaying the third visual object, authenticate the user through the identified authentication scheme, and in response to authenticating the user, provide the service based on interworking with the external electronic device. For example, the visual object for indicating the identified authentication scheme from among the first visual objects may be highlighted relative to remaining visual objects from among the first visual objects.

In an embodiment, the electronic device may further comprise the display, and wherein the at least one processor, when the instructions are executed, may be further configured to identify an authentication scheme in which reference information for user authentication is unregistered from among the authentication schemes, and display the visual object for guiding input of the reference information via the display.

In an embodiment, the at least one processor, when the instructions are executed, may be configured to store data for identifying priority of each of the identified authentication schemes for each of the candidate contexts defined for the electronic device as associated with the data for service, and wherein the data on the priority may be updated based on an authentication scheme used when using the service from among the authentication schemes.

As described above, the electronic device(e.g., electronic device 101) may comprise a display(e.g., display module 160), a communication circuit (e.g., communication module 190), at least one memory(e.g., memory 130) configured to store instructions, and at least one processor(e.g., processor 120), and wherein the at least one processor, when the instructions are executed, may be configured to receive a user input requesting use of a service provided via a user authentication, based on interworking with an external electronic device, identify whether it is connectable with the external electronic device using the communication circuit, based on receiving the user input, display a first visual object for guiding to authenticate a user of the service by using a first authentication scheme from among a plurality of authentication schemes registered with respect to the service for the user authentication via the display, based on identifying connectable with the external electronic device by using the communication circuit and based on identifying that connection with the external electronic device is impossible by using the communication circuit, display, via the display, a second visual object for guiding to authenticate the user by using a second authentication scheme from among the plurality of authentication schemes.

In an embodiment, the at least one processor, when the instructions are executed, may be further configured to authenticate the user through the first authentication scheme or the second authentication scheme, based on at least one user input received while displaying the first visual object or the second visual object, and in response to the user authentication, provide the service based on interworking with the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

The various embodiments and terms used herein are not intended to limit the technical features described herein to specific embodiments and should be understood to include various modifications, equivalents, or substitutes of the embodiment. With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "the first", "the second", or "first", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

Various embodiments of the present document may be implemented as software (e.g., a program) including one or more instructions stored in a storage medium (or external memory) readable by a device (e.g., wearable device 100). For example, a processor (e.g., a processor) of a device (e.g., wearable device 100) may call and execute at least one of the one or more instructions stored from a storage medium. This makes it possible for the device to operate to perform at least one function according to at least one command called. The one or more instructions may include code generated by a compiler or code that may be executed by an interpreter. The device-readable storage medium may be provided in the form of a non-transitory storage medium. Here, the term 'non-transitory' indicates that a storage medium is a device that is tangible and does not include a signal (e.g., electromagnetic wave), and the term does not distinguish between a case where data is semi-permanently stored and a case where it is temporarily stored.

According to an embodiment, a method according to various embodiments disclosed in the present document may be provided by being included in a computer program product. The computer program products may be traded between sellers and buyers as products. The computer program products may be distributed in the form of device-readable storage media (e.g., compact disc read only memory (CD-ROM), or distributed (e.g., downloaded or uploaded) directly or online through an application store (e.g., Play Store^{™}) or between two user devices (e.g., smartphones). In the case of online distribution, at least part of the computer program products may be temporarily stored or temporarily created on a device-readable storage medium such as a manufacturer's server, a server in an application store, or a memory in a relay server.

According to various embodiments, each of the above-described components (e.g., a module or a program) may include a single object or a plurality of objects, and a part of the plurality of objects may be separated and provided in other components. According to various embodiments, one or more components or operations of the above-described corresponding components may be omitted, or one or more other components or operations may be added. Alternatively, or additionally, a plurality of components (e.g., modules or programs) may be integrated into one component. In this case, the integrated component may perform one or more functions of each of the components in the same or similar manner as those performed by the corresponding component among the plurality of components before the integration. According to various embodiments, operations performed by a module, a program, or other components may be executed sequentially, in parallel, repeatedly, or heuristic, performed in a different order, omitted, or one or more other operations may be added.

## Claims

1. An electronic device comprising:
a display;
a plurality of communication circuits;
at least one memory configured to store instructions; and
at least one processor configured to execute the instructions to:
receive a first user input requesting use of a service provided via a user authentication based at least in part on interworking with an external electronic device,
based on receiving of the first user input, identify a context of the electronic device by using at least one of the plurality of communication circuits,
identify a first authentication scheme corresponding to the context from a plurality of authentication schemes registered with respect to the service for user authentication,
control the display to display a first visual object indicating the first authentication scheme to authenticate a user of the service,
authenticate the user through the first authentication scheme based at least in part on at least one second user input received when the first visual object is displayed, and
in response to the authentication of the user, provide the service based at least in part on interworking with the external electronic device.

2. The electronic device of claim 1, wherein the at least one processor is further configured to execute the instructions to:
identify, based at least in part on signals received via at least one of the plurality of communication circuits, a position of the electronic device, and
identify the context based at least in part on the identified position.

3. The electronic device of claims 1 to 2, wherein the at least one processor is further configured to execute the instructions to:
identify a distance between the electronic device and the external electronic device, based at least in part on a received strength of a signal received via at least one of the plurality of communication circuits from the external electronic device, and
identify the context based at least in part on the identified distance.

4. The electronic device of claims 1 to 3, wherein the at least one processor is further configured to execute the instructions to:
identify, based at least in part on the distance, a communication scheme from among a plurality of communication schemes provided via the plurality of communication circuits, and
in response to the user authentication, provide the service by interworking with the external electronic device via a channel between the external electronic device and the electronic device established based at least in part on the identified communication scheme.

5. The electronic device of claims 1 to 4, further comprising:
an illuminance sensor,
wherein the at least one processor is further configured to execute the instructions to:
identify a brightness around the electronic device via the illuminance sensor, and
identify the context based at least in part on the brightness.

6. The electronic device of claims 1 to 5, wherein the at least one processor is further configured to execute the instructions to identify an authentication scheme with a highest priority with respect to the context, from the plurality of authentication schemes, as the first authentication scheme corresponding to the context, and
wherein a priority of the plurality of authentication schemes is identified based at least in part on past authentication heuristics including a history in which each of the plurality of authentication schemes has been used to authenticate the user.

7. The electronic device of claims 1 to 6, wherein the at least one processor is further configured to execute the instructions to:
identify a failure to authenticate the user through the first authentication scheme,
in response to identifying the failure to authenticate the user through the first authentication scheme, adjust the priority of the first authentication scheme, and
update the past authentication heuristics based at least in part on the adjusted priority.

8. The electronic device of claims 1 to 7, wherein the at least one processor is further configured to execute the instructions to:
based at least in part on the receiving the first user input, identify the context based at least in part on a received signal strength of each of a plurality of signals received via the plurality of communication circuits.

9. The electronic device of claims 1 to 8, wherein the at least one processor is further configured to execute the instructions to:
transmit information on the at least one second user input to the external electronic device,
receive, from the external electronic device, a result of a comparison between the information and reference information stored in the external electronic device, or another external electronic device connected with the external electronic device, and
authenticate the user based at least in part on the result.

10. The electronic device of claims 1 to 9, wherein the at least one processor is further configured to execute the instructions to:
identify a second authentication scheme from the plurality of authentication schemes, in response to identifying a failure to authenticate the user through the first authentication scheme, and
control the display to display a second visual object indicating the second authentication scheme for authenticating the user.

11. A method for operating an electronic device including a display and a plurality of communication circuits, the method comprising:
receiving a first user input requesting use of a service provided via a user authentication based at least in part on interworking with an external electronic device,
based on receiving of the first user input, identifying a context of the electronic device by using at least one of the plurality of communication circuits,
identifying a first authentication scheme corresponding to the context from a plurality of authentication schemes registered with respect to the service for user authentication,
controlling the display to display a first visual object indicating the first authentication scheme to authenticate a user of the service,
authenticating the user through the first authentication scheme based at least in part on at least one second user input received when the first visual object is displayed, and
in response to the authentication of the user, providing the service based at least in part on interworking with the external electronic device.

12. The method of claim 11, further comprising:
identifying, based at least in part on signals received via at least one of the plurality of communication circuits, a position of the electronic device, and
identifying the context based at least in part on the identified position.

13. The method of claims 11 to 12, further comprising:
identifying a distance between the electronic device and the external electronic device, based at least in part on a received strength of a signal received via at least one of the plurality of communication circuits from the external electronic device, and
identifying the context based at least in part on the identified distance.

14. The method of claims 11 to 13, further comprising:
identifying, based at least in part on the distance, a communication scheme from among a plurality of communication schemes provided via the plurality of communication circuits, and
in response to the user authentication, providing the service by interworking with the external electronic device via a channel between the external electronic device and the electronic device established based at least in part on the identified communication scheme.

15. The method of claims 11 to 14, further comprising:
identifying a brightness around the electronic device via an illuminance sensor of the electronic device, and
identifying the context based at least in part on the brightness.
